# EUROPEAN PATENT SPECIFICATION

(11) **EP 2 896 039 B1**
(45) Date of publication and mention of the grant of the patent: **29.04.2020**
(21) Application number: 13836614.1
(22) Date of filing: 09.09.2013
(51) Int. Cl.: G10L 15/06, G10L 15/187, G10L 15/02

(54) **IMPROVING PHONETIC PRONUNCIATION**
VERBESSERUNG DER PHONETISCHEN AUSSPRACHE
AMÉLIORATION DE PRONONCIATION PHONÉTIQUE

(30) Priority: 11.09.2012 US 201261699335 P; 23.07.2013 US 201313948996
(43) Date of publication of application: 22.07.2015
(73) Proprietor: Google LLC, Mountain View, CA 94043 (US)
(72) Inventor: JANSCHE, Martin, Mountain View California 94043 (US); EPSTEIN, Mark Edward, Katonah, New York 10536 (US); CHELBA, Ciprian I., Palo Alto, California 94301 (US)
(74) Representative: Watkin, Timothy Lawrence Harvey
(86) International application number: PCT/US2013/058754
(87) International publication number: WO 2014/043027

(56) References cited:
- WO-A1-2011/091516
- US-A1- 2006 215 821
- US-A1- 2008 037 720
- US-A1- 2008 062 280
- US-A1- 2008 189 122
- US-A1- 2008 207 242
- US-A1- 2008 207 242
- US-A1- 2009 190 728
- US-A1- 2011 250 570

## Description

### TECHNICAL FIELD

This specification relates to speech recognition.

### BACKGROUND

Speech recognition refers to the process of converting spoken words to text. Speech recognition systems translate verbal utterances into a series of computer readable sounds which are compared to known words. For example, a microphone may accept an analog signal which is converted into a digital form that is divided into smaller segments. The digital segments can be compared to the smallest elements of a spoken language. From this comparison, the speech recognition system can identify words by analyzing the sequence of the identified sounds to determine, for example, corresponding textual information.
Techniques related to setting up communication between two parties using voice commands have been described in the US 2008/0037720 A1. Techniques related to the provision of an audio nickname tag in connection with a push-to-talk service have been described in the US 2008/020742 A1.

### SUMMARY

The invention is defined in the appended claims.

Particular embodiments of the subject matter described in this specification can be implemented so as to realize one or more of the following advantages. Along with improving speech recognition, a user's experience can be improved by having devices pronounce their name corrected and by improving identification of user names. Speech recognition can be improved. Correct pronunciation and identification of the user names can improve the user experience. The personalization of the user experience can be improved.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 illustrates an example of a user providing a pronunciation for their name.
FIG. 2 is a diagram 200 of example sources of social graph information.
FIG. 3 illustrates an example system for speech recognition.
FIG. 4 is a flow chart of a sample process to improve name pronunciation.

Like reference numbers and designations in the various drawings indicate like elements.

### DETAILED DESCRIPTION

Speech recognition applications are becoming ubiquitous. Users access speech recognition systems on their phones to dial their contacts. However, the pronunciation of individual names may not comply with the standard pronunciation of the user's language. For example, the name "Mara" may be pronounced "mair-uh" or "mar-uh"; however, many voice-recognition applications cannot properly recognize the former pronunciation. The quality of voice recognition can be improved by allowing users to provide a sound file of their name being pronounced and using that pronunciation in situations where their name is likely to be referenced.

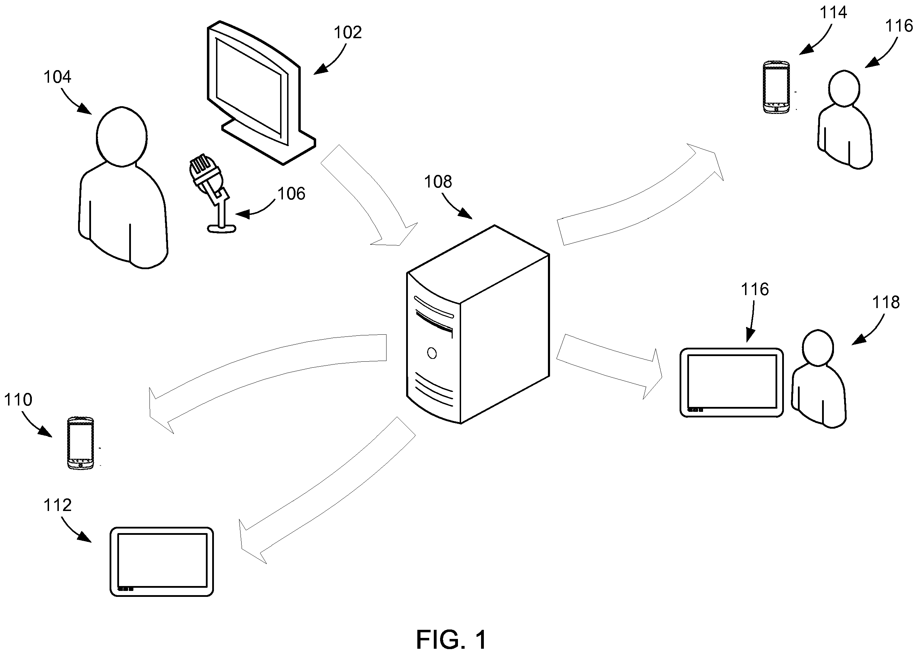

FIG. 1 illustrates an example of a user providing a pronunciation for their name, or the name of another individual in their social circle, so that this pronunciation provided by user is available for applications and other users. A user 104 can provide a pronunciation of the name to a computer system 102 using a microphone 106 or other type of transducer. In one arrangement, the user 104 may access a profile page associated with a social networking site to collect the audible information. For example, the profile page may include a link that allows a user to upload a sound file or to record the user's name directly into a new sound file. The sound file can be sent to a computer system 108 hosting the social networking site. The computer system 108 may process the sound file to determine pronunciation information. The pronunciation information can include, for example, the sound file recording of the user 104 stating their name. The pronunciation information can also include information that can be used directly by voice recognition and synthetic voice software to correctly pronounce the user's name.

In some implementations, the user can provide a pronunciation through other devices associated with the social networking site. For example, the user may provide their name to a smart phone that may be used to access the social networking site. With the user's permission, the smart phone may provide the pronunciation to the social networking site with which the smart phone is capable of transferring data (e.g., synchronized).

The pronunciation information can be distributed (e.g., upon being provided to the social networking site) to devices of the user 104 for example a smart phone 110 and the tablet 112. The pronunciation can be used by the devices in order to customize the user experience. For example, the devices may use the pronunciation information for use in text-to-speech applications.

The computer system 108 can also provide the pronunciation information to devices (for example the smart phone 114, the tablet 116) of other users (for example user 116 and user 118) associated with the user 104 on the social networking site. The pronunciation information can be used by these devices in order to correctly identify the user 104. For example the pronunciation information can be used in conjunction with contact information stored on the smart phone 114 (such as a contact entry for the user 104 in the smart phone's memory). When the user 116? refers to the user 104 using a voice recognition application on the smart phone 114, the smart phone 114 can correctly identify the user 104. In some implementations, the smart phone 114 is capable of playing back the pronunciation of the name of the user 104 to the user 116.

In some implementations, the social networking site can use the pronunciation information in other ways. For example, when the user 104 enters a chat room or enters a hang out on the social networking site the social networking site may announce the user using the pronunciation information and a text to speech application or may play the sound file of the user stating their name.

The social networking site may also distribute the pronunciation information to other members of the user's social circle. For example, if a user provides a pronunciation of their name, or the name of another member of the social circle, that pronunciation may be distributed to the other members of the user's social circle or the social circle of the user for whom the pronunciation is provided.

In some implementation, pronunciation information may be aggregated from several sources, for example, if several different members of a social network provide pronunciation information for a particular user, the pronunciation information may be aggregated. For example, if four different users refer to "Mara" by saying "Mair-uh" and one user refers to "Mara" by saying "Mar-uh," the system may aggregate the information and arrive at the pronunciation "Mair-uh."

In some implementations, the pronunciation information or sound file is accessible by user's accessing the social networking site. For example, individuals looking up information about the user 104 may be able to play the sound file to determine how the user is appropriately addressed. Similarly, the user 104 can play the sound file to confirm that the pronunciation is correct.

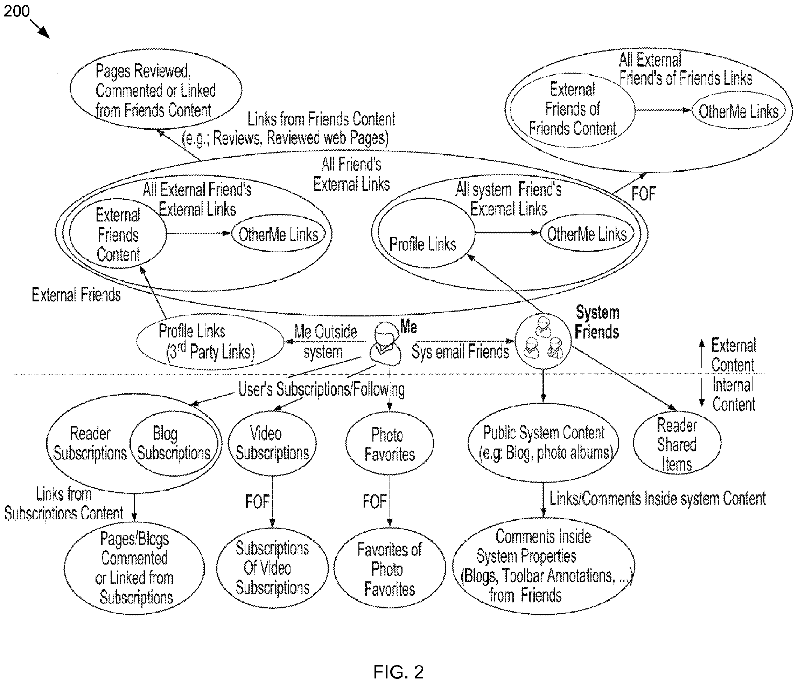

FIG. 2 is a diagram 200 of example sources of social graph information. The user's social graph is a collection of connections (e.g., users, resources) identified as having a relationship to the user within a specified degree of separation. The user's social graph can include people and particular content at different degrees of separation. For example, the social graph of a user can include friends, friends of friends (e.g., as defined by a user, social graphing site, or other metric), the user's social circle, people followed by the user (e.g., subscribed blogs, feeds, or web sites), co-workers, and other specifically identified content of interest to the user (e.g., particular web sites).

Diagram 200 shows a user and the different connections possible to extend a user's social graph to people and content both within a system and across one or more external networks and shown at different degrees of separation. For example, a user can have a profile or contacts list that includes a set of identified friends, a set of links to external resources (e.g., web pages), and subscriptions to content of the system (e.g., a system that provides various content and applications including e-mail, chat, video, photo albums, feeds, or blogs). Each of these groups can be connected to other users or resources at another degree of separation from the user. For example, the friends of the user each have their own profile that includes links to resources as well as friends of the respective friends. The connections to a user within a specified number of degrees of separation can be considered the social graph of the user. In some implementations, the number of degrees of separation used in determining the user's social graph are user set Alternatively, a default number of degrees of separation is used. Moreover, a dynamic number of degrees of separation can be used that is based on, for example, the type of connection.

In some implementations, the membership and degree of separation in the social graph is based on other factors, including a frequency of interaction. For example, a frequency of interaction by the user (e.g., how often the user visits a particular social graphing site) or type of interaction (e.g., endorsing or selecting items associated with friends). As interaction changes, the relationship of a particular contact in the social graph can also dynamically change. Thus, the social graph can be dynamic rather than static.

In some alternative implementations, social signals can be layered over the social graph (e.g., using weighted edges or other weights between connections in the social graph). These signals, for example, frequency of interaction or type of interaction between the user and a particular connection, can then be used to weight particular connections in the social graph or social graphs without modifying the actual social graph connections. These weights can change as the interaction with the user changes.

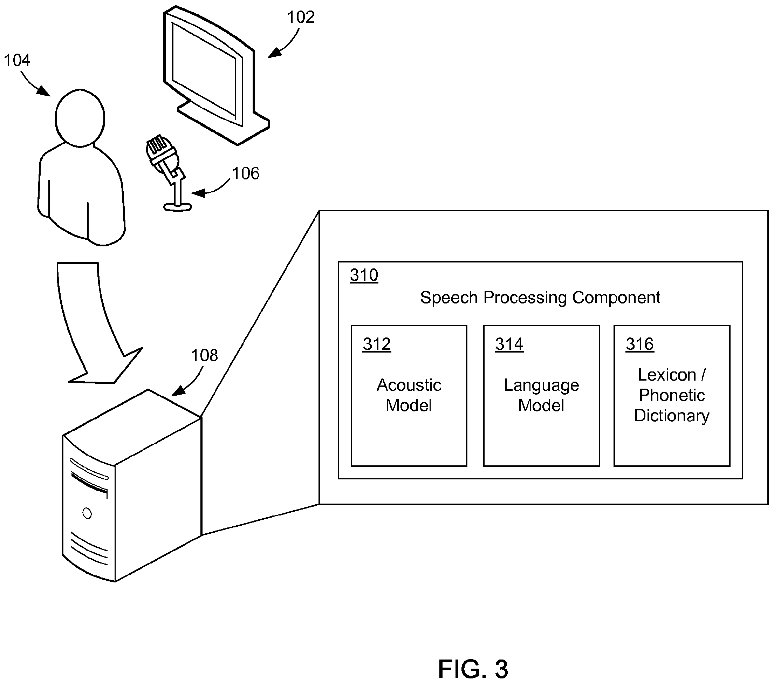

FIG. 3 illustrates an example system for speech recognition. In this particular arrangement, the user 104 speaks into the microphone 106 in communication with (or integrated into) the computer system 102. The computer system 102 may be a standalone computer connected to a network or any computational device connected to a microphone, for example, a personal computer, a tablet computer, a smart phone, etc.

The user's speech is sent to a computer system 108 over a network (not shown), for example, the Internet. The computer system includes a speech processing component 310. The speech processing component 310 includes an acoustic model 312, a language model 314, and a lexicon / phonetic dictionary 316.

The acoustic model 312 maps the sounds collected from the user 104 into component parts, called phones and can be considered as basic elements of speech. For example, the English language can be spoken using approximately 40 - 60 phones. The acoustic model 312 accepts sounds and maps them to corresponding phones. In some systems, phones are combined with neighboring phones to create tri-phones. These model phonemes in the context in which they appear. For example, the "t" in "Tim" is pronounced differently than the "t" in "butter". From the phones or tri-phones, the acoustic model 312 can determine one or more words that the user 104 may have spoken.

Even when using an appropriate acoustic model, the basic elements of speech can be identical or very similar. For example, an acoustic model alone cannot distinguish homonyms such as "red" and "read". As another example, an acoustic model may have difficulty with words that are not homonyms but sound very similar, like "Boston" and "Austin". In order to improve accuracy and select the correct word, the speech processing component 310 uses the language model 314. This class of language models is known as an n-gram model. Other language models exists that model longer term relationships, and even syntactic and semantic components within a sentence. All of these approaches can benefit from this techniques described herein.

The language model 314 contains a statistical representation of how often words co-occur. Words are said to co-occur if they are used in a sentence without any intervening words. For example, in the phrase "the quick brown fox jumped over the lazy dog" co-occurrences of two words include "the quick", "quick brown", "brown fox", "fox jumped", "jumped over", "over the", "the lazy", and "lazy dog". Co-occurrences of three words include "The quick brown", "quick brown fox", "brown fox jumped", "fox jumped over", "jumped over the", "over the lazy", "the lazy dog".

The lexicon / phonetic dictionary 316 maps word spellings to phonetic phones. For, example, a lexicon / phonetic dictionary, 316 may map the name "Mara" to "Mar-uh." A pronunciation and text version of the name provided by the user 104 can be used to update the lexicon/phonetic dictionary 316. For example, the speech processing component 310 can adjust the lexicon/phonetic dictionary 316 using the pronunciation information. The pronunciation information may provide a new acoustic phone to be associated with text, for example "mair ah" can be associated with Mara. Further, the language model may be updated to increase the likelihood that bi-grams including Mara will be viewed as valid, for example "Call Mara."

In some implementations, the speech processing component 310 compares the pronunciation provided by the user with the expected pronunciation before updating any model. For example, if the user provides the pronunciation "Bab" for the name "Bob", then no update may be necessary.

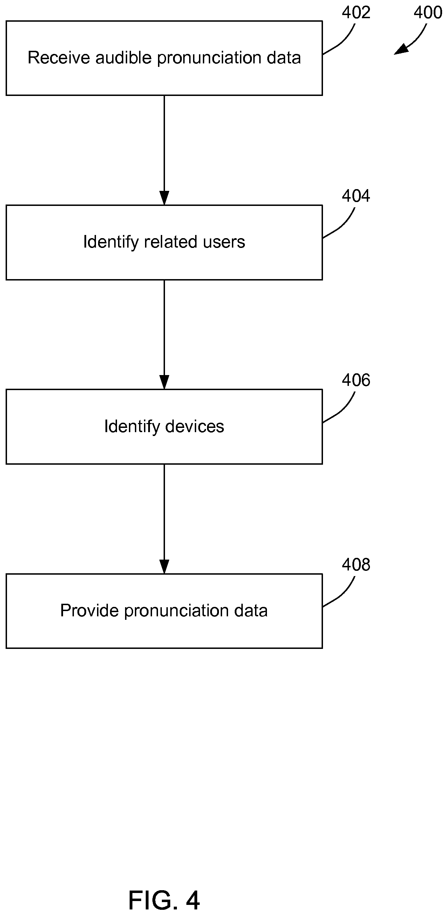

FIG. 4 is a flow chart of a sample process 400 to improve name pronunciation. The process can be performed by a data processing apparatus, for example, the computer system 108 of FIG. 1. For simplicity, the process 400 will be described in terms of a system performing the process 400.

Data that represents an audible pronunciation is received (402). The data may include a pronunciation of the name of an individual in an audio file. In some implementations, the data may be processed to generate voice recognition data that may be used in voice recognition systems.

Related users are identified (404). The users may be related to the individual in a social circle, for example, on a social networking site. In some implementations, the devices may include speakers or audio output and may be capable of producing an audible representation of the data.

Devices of the related users are identified (406). In some implementations, the devices are associated with the related users on the social networking site.

The pronunciation data is provided (408) to the identified devices. In some implementations, information that identifies the individual can also be provided. The devices may associate the pronunciation data with the individual, for example, in a contact record. The devices may use the data to update voice recognition or synthetic speech applications on the device.

For situations in which the systems discussed here collect personal information about users, or may make use of personal information, the users may be provided with an opportunity to control whether programs or features collect personal information (e.g., information about a user's social network, social actions or activities, profession, a user's preferences, or a user's current location), or to control whether and/or how to receive content from the content server that may be more relevant to the user. In addition, certain data may be anonymized in one or more ways before it is stored or used, so that personally identifiable information is removed. For example, a user's identity may be anonymized so that no personally identifiable information can be determined for the user, or a user's geographic location may be generalized where location information is obtained (such as to a city, ZIP code, or state level), so that a particular location of a user cannot be determined. Thus, the user may have control over how information is collected about him or her and used.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible program carrier for execution by, or to control the operation of, data processing apparatus. Alternatively or in addition, the program instructions can be encoded on a propagated signal that is an artificially generated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to as a program, software, a software application, a script, or code) can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output The processes and logic flows can also be performed by, and apparatus can also be implemented as, special purpose logic circuitry, e.g., an FPGA (field programmable gate array) or an ASIC (application-specific integrated circuit).

Computers suitable for the execution of a computer program include, by way of example, can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of any invention or of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain implementations, multitasking and parallel processing may be advantageous.

## Claims

1. A method (400) performed by data processing apparatus, the method comprising:
aggregating data provided by several different users of a social network that represents audible pronunciations of the name of an individual;
determining an audible pronunciation from the aggregated data;
identifying (404) one or more other users that have a predetermined association with the individual;
identifying (406) one or more devices associated with the other users; and
providing (408) information that identifies the individual and data representing the audible pronunciation to the one or more identified devices.

2. The method of claim 1, wherein the one or more devices are capable of audibly reproducing the pronunciation.

3. The method of claim 1, wherein the user device is a smart phone registered on a social networking site associated with a social circle (200) of the user.

4. The method of claim 1, wherein the pronunciation is associated with a contact entry associated with the user on at least one of the one or more user devices.

5. The method of claim 4, further comprising:
receiving, by one of the one or more devices, the voice recognition data;
identifying a contact entry associated with the individual using the identifying information;
associating the voice recognition data with the contact entry; and
updating a new pronunciation on the device using the voice recognition data.

6. A computer-readable storage device encoded with computer program instructions that when executed by one or more computers cause the one or more computers to perform the steps of any of claims 1 to 5.

7. A system (138) comprising:
one or more computers (138) and one or more storage devices storing instructions that are operable, when executed by the one or more computers, to cause the one or more computers to perform operations comprising:
aggregating data provided by several different users of a social network that represents audible pronunciations of the name of an individual;
determining an audible pronunciation from the aggregated data;
identifying one or more other users that have a predetermined association with the individual;
identifying one or more devices associated with the other users; and
providing information that identifies the individual and data representing the audible pronunciation to the one or more identified devices.

8. The system of claim 7, wherein the one or more devices are capable of audibly reproducing the pronunciation.

9. The system of claim 7, wherein the user device is a smart phone registered on a social networking site associated with a social circle of the user.

10. The system of claim 7, wherein the pronunciation is associated with a contact entry associated with the user on at least one of the one or more user devices.

11. The system of claim 10, the one or more storage devices further storing instructions that are operable, when executed by the one or more computers, to cause the one or more computers to perform operations comprising:
receiving, by one of the one or more devices, the voice recognition data;
identifying a contact entry associated with the individual using the identifying information;
associating the voice recognition data with the contact entry; and
updating a new pronunciation on the device using the voice recognition data.

## Patentansprüche

1. Verfahren (400), ausgeführt durch eine Datenverarbeitungsvorrichtung, wobei das Verfahren umfasst:
Aggregieren von Daten, die durch verschiedene unterschiedliche Benutzer eines sozialen Netzwerkes bereitgestellt werden, welche hörbare Aussprachen des Namens einer Person darstellen;
Bestimmen einer hörbaren Aussprache aus den aggregierten Daten;
Identifizieren (404) eines oder mehrerer weiterer Benutzer, welche eine vorbestimmte Zuordnung zu der Person aufweisen;
Identifizieren (406) einer oder mehrerer Vorrichtungen, welche den weiteren Benutzern zugeordnet sind; und
Bereitstellen (408) von Informationen, welche die Person identifizieren und Daten, welche die hörbare Aussprache darstellen, an die eine oder die mehreren identifizierten Vorrichtungen.

2. Verfahren nach Anspruch 1, wobei die eine oder die mehreren Vorrichtungen in der Lage sind, die Aussprache hörbar zu reproduzieren.

3. Verfahren nach Anspruch 1, wobei die Benutzervorrichtung ein Smartphone ist, welches auf dem Site eines sozialen Netzwerks registriert ist, welches einem sozialen Kreis (200) des Benutzers zugeordnet ist.

4. Verfahren nach Anspruch 1, wobei die Aussprache einer Kontakteingabe zugeordnet ist, welche dem Benutzer auf mindestens einem der einen oder der mehreren Benutzervorrichtungen zugeordnet ist.

5. Verfahren nach Anspruch 4, ferner umfassend:
Empfangen, durch eine der einen oder mehreren Vorrichtungen, der Spracherkennungsdaten;
Identifizieren einer Kontakteingabe, die der Person zugeordnet ist, die die identifizierenden Informationen verwendet;
Zuordnen der Spracherkennungsdaten zu der Kontakteingabe; und
Aktualisieren einer neuen Aussprache auf der Vorrichtung unter Verwendung der Spracherkennungsdaten.

6. Computerlesbare Speichervorrichtung, welche mit Computerprogrammanweisungen kodiert ist, welche, wenn durch einen oder mehrere Computer ausgeführt, veranlassen, dass der eine oder die mehreren Computer die Schritte nach einem der Ansprüche 1 bis 5 ausführen.

7. System (138), umfassend:
einen oder mehrere Computer (138) und eine oder mehrere Speichervorrichtungen, welche Anweisungen speichern, welche, wenn durch den einen oder die mehreren Computer ausgeführt, veranlassen, dass der eine oder die mehreren Computer Operationen ausführen, umfassend:
Aggregieren von Daten, die durch verschiedene unterschiedliche Benutzer eines sozialen Netzwerkes bereitgestellt werden, welche hörbare Aussprachen des Namens einer Person darstellen;
Bestimmen einer hörbaren Aussprache aus den aggregierten Daten;
Identifizieren eines oder mehrerer weiterer Benutzer, welche eine vorbestimmte Zuordnung zu der Person aufweisen;
Identifizieren einer oder mehrerer Vorrichtungen, welche den weiteren Benutzern zugeordnet sind; und
Bereitstellen von Informationen, welche die Person identifizieren und Daten, welche die hörbare Aussprache darstellen, an die eine oder die mehreren identifizierten Vorrichtungen.

8. System nach Anspruch 7, wobei die eine oder die mehreren Vorrichtungen in der Lage sind, die Aussprache hörbar zu reproduzieren.

9. System nach Anspruch 7, wobei die Benutzervorrichtung ein Smartphone ist, welches auf dem Site eines sozialen Netzwerks registriert ist, welches einem sozialen Kreis des Benutzers zugeordnet ist.

10. System nach Anspruch 7, wobei die Aussprache einer Kontakteingabe zugeordnet ist, welche dem Benutzer auf mindestens einem der einen oder der mehreren Benutzervorrichtungen zugeordnet ist.

11. System nach Anspruch 10, wobei die eine oder die mehreren Speichervorrichtungen ferner Anweisungen speichern, welche, wenn durch den einen oder die mehreren Computer ausgeführt, veranlassen, dass der eine oder die mehreren Computer Operationen ausführen, umfassend:
Empfangen, durch eine der einen oder mehreren Vorrichtungen, der Spracherkennungsdaten;
Identifizieren einer Kontakteingabe, die der Person zugeordnet ist, die die identifizierenden Informationen verwendet;
Zuordnen der Spracherkennungsdaten zu der Kontakteingabe; und
Aktualisieren einer neuen Aussprache auf der Vorrichtung unter Verwendung der Spracherkennungsdaten.

## Revendications

1. Procédé (400) réalisé par un appareil de traitement de données, le procédé comprenant :
l'agrégation de données qui sont fournies par plusieurs utilisateurs différents d'un réseau social et qui représentent des prononciations audibles du nom d'un individu ;
la détermination d'une prononciation audible à partir des données agrégées ;
l'identification (404) d'un ou de plusieurs autre(s) utilisateur(s) qui présente(nt) une association prédéterminée avec l'individu ;
l'identification (406) d'un ou de plusieurs dispositif(s) qui est/sont associé(s) aux autres utilisateurs ; et
la fourniture (408) d'une information qui identifie l'individu et de données qui représentent la prononciation audible aux un ou plusieurs dispositifs identifiés.

2. Procédé selon la revendication 1, dans lequel les un ou plusieurs dispositifs disposent d'une capacité de reproduction audible de la prononciation.

3. Procédé selon la revendication 1, dans lequel le dispositif utilisateur est un téléphone intelligent qui est enregistré sur un site de réseautage social qui est associé à un cercle social (200) de l'utilisateur.

4. Procédé selon la revendication 1, dans lequel la prononciation est associée à une entrée de contact qui est associée à l'utilisateur sur au moins l'un des un ou plusieurs dispositifs utilisateur.

5. Procédé selon la revendication 4, comprenant en outre :
la réception, par l'un des un ou plusieurs dispositifs, des données de reconnaissance vocale ;
l'identification d'une entrée de contact qui est associée à l'individu qui utilise l'information d'identification ;
l'association des données de reconnaissance vocale avec l'entrée de contact ; et
la mise à jour d'une nouvelle prononciation sur le dispositif en utilisant les données de reconnaissance vocale.

6. Dispositif de stockage qui peut être lu par un ordinateur et qui est codé avec des instructions de programme informatique qui, lorsqu'elles sont exécutées par un ou plusieurs ordinateur(s), forcent les un ou plusieurs ordinateurs à réaliser les étapes selon l'une quelconque des revendications 1 à 5.

7. Système (138) comprenant :
un ou plusieurs ordinateur(s) (138) et un ou plusieurs dispositif(s) de stockage qui stocke(nt) des instructions qui peuvent être rendues opérationnelles, lorsqu'elles sont exécutées par les un ou plusieurs ordinateurs, pour forcer les un ou plusieurs ordinateurs à réaliser les opérations comprenant :
l'agrégation de données qui sont fournies par plusieurs utilisateurs différents d'un réseau social et qui représentent des prononciations audibles du nom d'un individu ;
la détermination d'une prononciation audible à partir des données agrégées ;
l'identification d'un ou de plusieurs autre(s) utilisateur(s) qui présente(nt) une association prédéterminée avec l'individu ;
l'identification d'un ou de plusieurs dispositif(s) qui est/sont associé(s) aux autres utilisateurs ; et
la fourniture d'une information qui identifie l'individu et de données qui représentent la prononciation audible aux un ou plusieurs dispositifs identifiés.

8. Système selon la revendication 7, dans lequel les un ou plusieurs dispositifs disposent d'une capacité de reproduction audible de la prononciation.

9. Système selon la revendication 7, dans lequel le dispositif utilisateur est un téléphone intelligent qui est enregistré sur un site de réseautage social qui est associé à un cercle social de l'utilisateur.

10. Système selon la revendication 7, dans lequel la prononciation est associée à une entrée de contact qui est associée à l'utilisateur sur au moins l'un des un ou plusieurs dispositifs utilisateur.

11. Système selon la revendication 10, les un ou plusieurs dispositifs de stockage stockant en outre des instructions qui peuvent être rendues opérationnelles, lorsqu'elles sont exécutées par les un ou plusieurs ordinateurs, pour forcer les un ou plusieurs ordinateurs à réaliser les opérations comprenant :
la réception, par l'un des un ou plusieurs dispositifs, des données de reconnaissance vocale ;
l'identification d'une entrée de contact qui est associée à l'individu qui utilise l'information d'identification ;
l'association des données de reconnaissance vocale avec l'entrée de contact ; et
la mise à jour d'une nouvelle prononciation sur le dispositif en utilisant les données de reconnaissance vocale.
